# EUROPEAN PATENT SPECIFICATION

(11) **EP 1 699 228 B1**
(45) Date of publication and mention of the grant of the patent: **17.12.2008**
(21) Application number: 05022788.3
(22) Date of filing: 19.10.2005
(51) Int. Cl.: H04N 5/225

(54) **Camera module and the manufacturing process thereof**
Kameramodul und Verfahren zu dessen Herstellung
Module de caméra et son procédé de fabrication

(30) Priority: 04.03.2005 CN 200510053161
(43) Date of publication of application: 06.09.2006
(73) Proprietor: Premier Image Technology Corporation, Taipei (TW)
(72) Inventor: Lung, Chien Lieh, Taipei (TW)
(74) Representative: Viering, Jentschura & Partner

(56) References cited:
- EP-A- 0 978 251
- EP-A- 1 347 637
- EP-A- 1 465 411
- WO-A-20/04107437
- US-A1- 2004 263 680
- US-B1- 6 734 419

## Description

### BACKGROUND OF THE INVENTION

### 1. Field of the Invention

The present invention relates to a camera module, and more particularly, to a high heatproof camera module.

### 2. Description of the Related Art

A wide variety of audio and video information is now widely available in digital formats. An important device for the inputting and outputting of such information is the camera module. Because of its applicability in a broad array of fields, from small devices such as mobile phones, personal digital assistants (PDAs) to large devices such as large digital video cameras (including monitor systems), the digital camera module is becoming more and more useful.

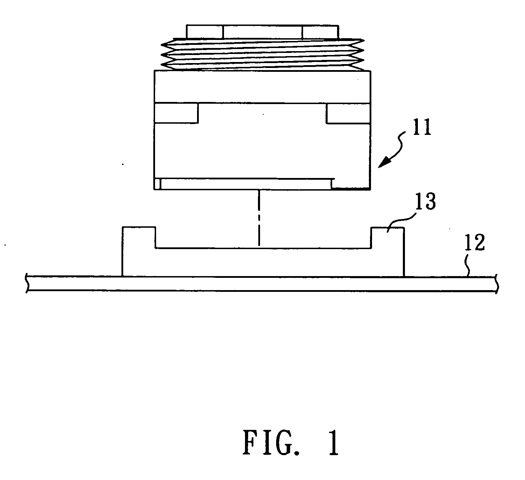

Please refer to FIG. 1. When the traditional camera module 11 is assembled onto a main board 12 of a system, such as a mobile phone system, a laptop computer system, a digital camera system, or a digital video system, a socket 13 is usually required to connect the camera module 11 with the main board 12. Once the camera module 11 is electrically connected to the main board 12, the mobile phone, laptop computer, digital camera, or digital video camera, etc. is provided the functionality of a camera, and is able to provide static photographs, or even dynamic monitoring (such as a rear-view monitor for backing up a car).

However, the traditional camera module 11 is not heatproof, and so surface mount technology (SMT), which uses high-heat soldering equipment, cannot be used to assemble the camera module 11 with the main board 12. As a result, the traditional camera module 11 may be not provided for SMT assembly process and neither to achieve mass production.

The European patent application No. EP1465411A, discloses a compact camera module that is capable of preventing adhesion of dust to an image pickup device in the compact module. This publication targets for preventing adhesion of dust to an image pickup device in the compact module. Thus, the compact camera module is required to heat to a high temperature (100°C) to allow the air in the space to expand. Though it may allow the air in the space to expand, the compact camera module is not a surface mount device because it is attached the solid image pickup unit to the lens by thermosetting resin instead by SMT. Therefore, it is not able to be fabricated by SMT.

US Patent No. 6734419 discloses a method for forming an image sensor package with vision die in lens housing. The US Patent No. 6734419 targets that the image sensor may be made by surface mount technology. Though it solves the production difficulty of the image sensor, it leaves problems of the mass production for the camera module, since the camera module needs not only the image sensor, but also the lens to focus or zoom.

Regarding the patent publication of W02004107437A, it discloses an image sensing module and a method for constructing the same. It is learned from this patent publication that the plastic molding material is preferably a thermoplastic material with high melting point in the range of 300-400°C. It solves the difficulty of the holder for the image sensing module, but it still cannot have a camera module to be produced by SMT.

### SUMMARY OF THE INVENTION

In order to resolve the above-mentioned problems, the present invention discloses a high heatproof camera module and a related manufacturing process thereof, which employs surface mount technology to directly bond the camera module onto a main board of a system.

A camera module and a process for manufacturing according to the invention are set out in claims 1 and 6.

The present invention provides a camera module comprising a lens, a lens holder, the lens and the lens holder engaged with each other, and an image sensor board located under the lens holder. The lens is formed from a highly heatproof material, preferably sustaining with more than 180°C-the high temperature requirements of SMT soldering equipment. The highly heatproof material of the lens may be a ceramic, a highly heatproof glass, or the like. Additionally, because the lens holder of the present invention must also sustain with high temperature requirements of SMT soldering equipment, the lens holder is formed of a highly heatproof material, such as liquid crystal polymer (LCP), nylon, or the like. In addition, the image sensor board is typically made by SMT, so it can sustain the high temperatures of SMT soldering equipment.

The present invention also provides a manufacturing process for a camera module that comprises: providing a lens; engaging the lens with a lens holder; fixing an image sensor board onto a bottom of the holder; and combining the lens, the lens holder, and the image sensor board to form a surface mount device (SMD).

In one embodiment, before the step of forming the SMD, further comprises the step of adjusting the lens to substantially provide focus.

In another embodiment, the step of forming the SMD may further comprise the step of mounting solder balls on the SMD or applying solder on a surface of the SMD.

Other objects, advantages, and novel features of the invention will become more apparent from the following detailed description when taken in conjunction with the accompanying drawings.

### BRIEF DESCRIPTION OF THE DRAWINGS

FIG. 1 is a schematic drawing of a conventional camera module.
FIG. 2 is an exploded view of a camera module according to the present invention.
FIG. 3 is a perspective view of the camera module of FIG. 2, where the camera module is to be mounted onto a main board.
FIG. 4 is a side view of the camera module and the main board of FIG. 3, where the camera module is mounted onto the main board.
FIG. 5 is a flow chart of a manufacturing process for the camera module according to the present invention.

### DETAILED DESCRIPTION OF THE PREFERRED EMBODIMENT

The following descriptions of the preferred embodiments are provided to help understand the features and structures of the present invention.

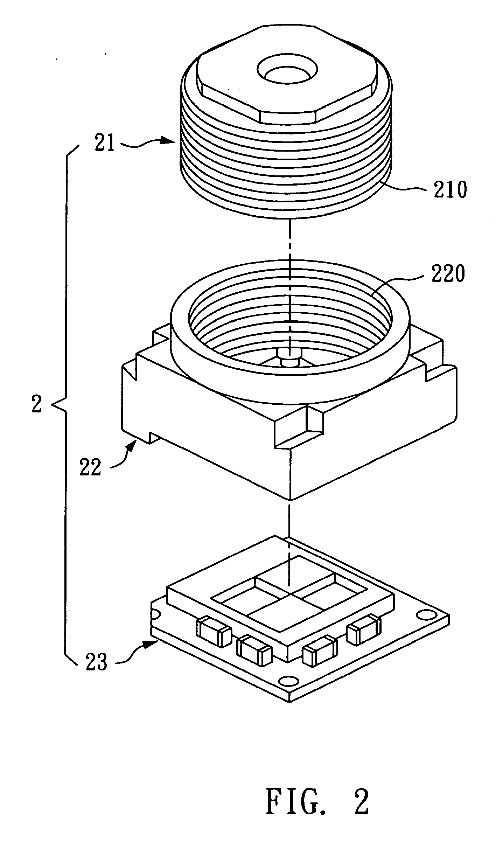

Please refer to FIG 2, which shows an exploded view of a camera module 2 according to the present invention. The camera module 2 of this invention comprises a lens 21, a lens holder 22, and an image sensor board 23. The lens 21 and the lens holder 22 are engaged with each other. The image sensor board 23 is located under the lens holder 22 for the forming of an image. By adjusting the lens 21, the best focus of the camera module 2 can be reached.

In one exemplary embodiment, the engagement of the lens 21 and the holder 22 may be adapted by outer threads 210 of the lens 21 and inner threads 220 of the holder 22. Additionally, the engagement of the threads 210 and 220 can make the lens 21 movable; therefore, by moving the lens 21 to adjust the focus, the best focus of the camera module 2 can be reached.

The lens 21 of the present invention is formed of a highly heatproof material. In one exemplary embodiment of this invention, the highly heatproof material can sustain temperatures in excess of 180°C, such as the high temperatures of SMT soldering equipment (the typical temperature of soldering equipment is between about 180°C and 240°C). The material of the lens 21 may be, for example, ceramic, highly heatproof glass, or other such materials. Because the lens holder 22 of this invention is also required to sustain the high temperatures (i.e., in excess of 180°C) of SMT soldering equipment, it is also formed from a highly heatproof material, such as liquid crystal polymer (LCP), nylon, or the like.

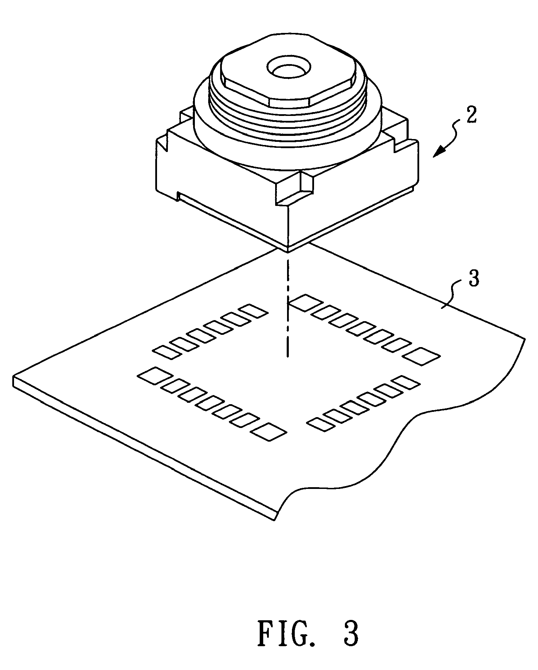

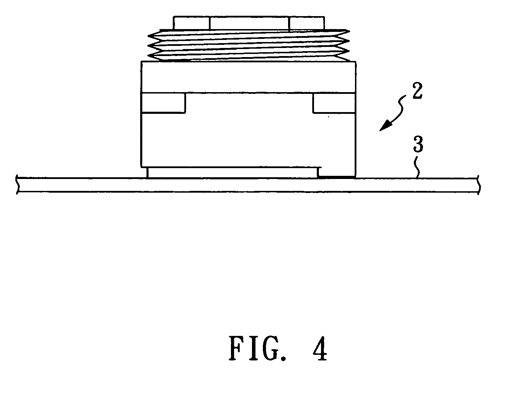

The lens 21 and the lens holder 22 are respectively formed from highly heatproof materials that are able to withstand the high temperatures of SMT soldering equipment. Normally, as known by those skilled in the art, the image sensor board 23 is made by SMT, so it is also able to sustain the high temperatures of SMT soldering equipment. The camera module 2 consequently is able to sustain the high temperatures of SMT soldering equipment. As shown in FIG 3 and FIG 4, the camera module 2, another embodiment of this invention, can be mounted onto a main board 3 of a system, such as a mobile phone system, a laptop computer system, a digital camera system, a digital video system, or the like. Thus, because of the electrical connection provided between the main board 3 and the camera module 2, the system (e.g. a mobile phone, a laptop computer, a digital camera, a digital video, etc.) is provided with camera-related functionalities. These functionalities include not only the static functions of still photography, but also dynamic monitoring, such as rear-view monitors for backing up a car.

The camera module 2 of this invention can sustain the high temperatures of SMT soldering equipment, enabling system manufacturers to bond the camera module 2 onto the main board 3 by surface mount technology, which thus enables production automation.

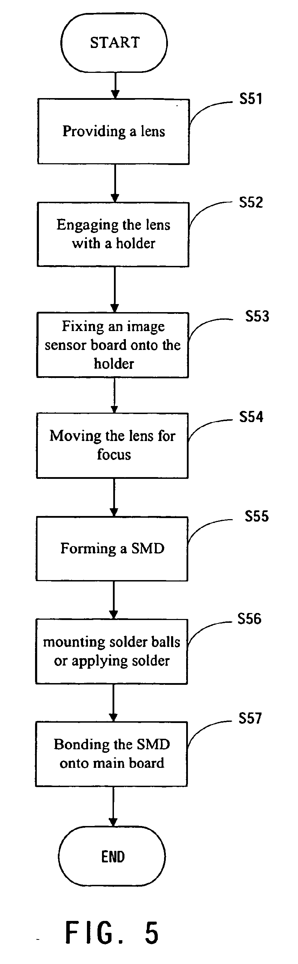

The manufacturing process for the camera module 2 according to this invention is described below. Referring to FIG. 2 and FIG. 5, after the block labeled "start", step S51 provides a lens 21. Next, in step 52, the lens 21 is engaged with a lens holder 22, as described above, the engagement of the lens 21 and the lens holder 22 may be adapted by outer threads 210 of the lens 21 and inner threads 220 of the holder 22. In step S53, an image sensor board 3 is fixed onto a bottom of the lens holder 22.

In one embodiment, as required by system manufacturers, the lens 21 may need to be adjusted to pre-focus by a calibration tool (not shown), and thus the process of this invention also provides a step for the focusing of the lens 21, as shown in step S54. Preferably, the camera module 2 may be adjusted with a calibration tool to provide the appropriate focus by moving the lens 21 and the lens holder 22, and then stabilizing the best-focus position.

In step S55, a surface mount device (SMD) of the camera module 2 is formed by combining the lens 21, the lens holder 22, and the image sensor board 23. In step S57, the SMD of the camera module 2 can be adapted for bonding onto a main board 3 of a system, such as a mobile phone system, a laptop computer system, a digital camera system, a digital video system, or the like, with an SMT machine (not shown). Thus, because of the electrical connection provided between the main board 3 and the camera module 2, the system (e.g. a mobile phone, a laptop computer, a digital camera, a digital video, etc.) is provided with camera-related functions.

In one preferred embodiment, in order to bond the camera module 2 onto the main board 3, the step of forming the SMD may further comprise a step of mounting solder balls onto the SMD, or applying solder onto a surface of the SMD, as indicated in step S56. Finally, in step S57, the SMD of camera module 2 is bonded onto the main board 3 by surface mount technology.

This invention may further comprise the step of packing the SMD of camera module 2, such as packing the SMD of camera module 2 in a tube or a roll, according to the SMT machine. Because this invention utilizes highly heatproof materials, it can be used in SMT machines for more efficient mass production. Additionally, the present invention can reduce costs associated with the socket 13, as depicted in FIG. 1, between the traditional camera module 11 and main board 12.

Although the present invention has been explained in relation to its preferred embodiment, it is to be understood that many other possible modifications and variations can be made without departing from the scope of the invention as hereinafter claimed.

## Claims

1. A camera module (2) adapted for processing with surface mount technology (SMT) with a soldering equipment having a temperature between 180°C and 240°C comprising a lens (21), a lens holder(22), and an image sensor board (23), which is **characterized in that:**
the lens (21) being capable of sustaining temperatures in excess of 180°C;
the lens holder (22) engaged with the lens (21), the lens holder (22) being capable of sustaining temperatures in excess of 180°C; and
the image sensor board (23) is directly fixed onto the bottom of the lens holder (22).

2. The camera module of claim 1, wherein the lens (21) is formed chosen from a group consisting of highly heatproof glass and ceramic.

3. The camera module of claim 1, wherein the lens holder (22) is formed chosen from a group consisting of liquid crystal polymer and nylon.

4. The camera module of claim 1, wherein the camera module (2) is capable of being bonded onto a main board (3) of a system by surface mount technology (SMT).

5. The camera module of claim 4, wherein the system is chosen from a group consisting of a mobile phone system, a laptop computer system, a digital camera system, and a digital video system.

6. A process for manufacturing camera modules (2) adapted for processing with surface mount technology (SMT) with a soldering equipment having a temperature between 180°C and 240°C, comprising:
providing a lens (21), wherein the lens (21) is capable of sustaining temperatures in excess of 180°C;
engaging the lens (21) with a lens holder (22);
fixing an image sensor board (23) directly onto a bottom of the lens holder (22); and
combining the lens (21), the lens holder (22), and the image sensor board (23) to form a surface mount device (2), wherein the surface mount device is capable of sustaining temperatures in excess of 180°C.

7. The process of claim 6 further comprising a step of focusing the lens (21) before forming the surface mount device (2).

8. The process of claim 6, wherein the step of forming the surface mount device (2) further comprises a step of mounting solder balls on the surface mount device (2) or a step of applying solder on a surface of the surface mount device (2).

9. The process of claim 6, wherein the step of forming the surface mount device (2) further comprises a step of bonding the surface mount device (2) onto a main board (3) of a system.

## Patentansprüche

1. Ein Kameramodul (2), welches zur Verarbeitung mittels Oberflächenbefestigungstechnologie (SMT) mit einer Löteinrichtung mit einer Temperatur zwischen 180°C und 240°C angepasst ist und welches eine Linse (21), einen Linsenhalter (22) und eine Bildsensorplatine (23) umfasst, wobei es
**dadurch gekennzeichnet ist, dass**
die Linse (21) Temperaturen über 180°C aushalten kann;
der Linsenhalter (22) mit der Linse (21) verbunden ist, wobei der Linsenhalter (22) Temperaturen über 180°C aushalten kann; und
die Bildsensorplatine (23) direkt auf dem Boden bzw. Unterteil des Linsenhalters (22) fixiert ist.

2. Das Kameramodul nach Anspruch 1, wobei die Linse (21) aus einem aus einem hochtemperaturbeständigen Glas und einer Keramik bestehenden Gruppe ausgewählten Material erzeugt ist.

3. Das Kameramodul nach Anspruch 1, wobei der Linsenhalter (22) aus einem aus der aus Flüssigkristallpolymer und Nylon bestehenden Gruppe ausgewählten Material ausgebildet ist.

4. Das Kameramodul nach Anspruch 1, wobei das Kameramodul (2) auf eine Hauptplatine (3) eines Systems durch Oberflächenbefestigungstechnologie (SMT) gebunden werden kann.

5. Das Kameramodul nach Anspruch 4, wobei das System aus einer aus einem Mobiltelefonsystem, einem Laptop-Computersystem, einem Digitalkamerasystem und einem Digitalvideosystem bestehenden Gruppe ausgewählt ist.

6. Ein Verfahren zur Herstellung eines Kameramoduls (2), das für die Verarbeitung mittels Oberflächenbefestigungstechnologie (SMT) mit einer Löteinrichtung mit einer Temperatur zwischen 180°C und 240°C angepasst ist, umfassend:
Vorsehen einer Linse (21), wobei die Linse (21) Temperaturen über 180°C aushalten kann;
Verbindung der Linse (21) mit einem Linsenhalter (22);
Fixieren einer Bildsensorplatine (23) direkt auf dem Boden bzw. Unterteil des Linsenhalters (22); und
Zusammenfügen der Linse (21), des Linsenhalters (22) und der Bildsensorplatine (23), um eine Oberflächenbefestigungsvorrichtung (2) zu erzeugen, wobei die Oberflächenbefestigungsvorrichtung Temperaturen über 180°C aushalten kann.

7. Das Verfahren nach Anspruch 6, welches vor der Ausbildung der Oberflächenbefestigungsvorrichtung (2) ferner einen Schritt der Fokussierung der Linse (21) umfasst.

8. Das Verfahren nach Anspruch 6, wobei der Schritt zur Erzeugung der Oberflächenbefestigungsvorrichtung (2) ferner einen Schritt der Aufbringung von Lötkügelchen auf der Oberflächenbefestigungsvorrichtung (2) oder einen Schritt der Aufbringung von Lot auf eine Oberfläche der Oberflächenbefestigungsvorrichtung (2) umfasst.

9. Das Verfahren nach Anspruch 6, wobei der Schritt der Erzeugung der Oberflächenbefestigungsvorrichtung (2) ferner einen Schritt des Anbindens der Oberflächenbefestigungsvorrichtung (2) auf eine Hauptplatine (3) eines Systems umfasst.

## Revendications

1. Module de caméra (2) adapté pour un traitement à l'aide d'une technologie de montage en surface (SMT) avec un équipement de brasage ayant une température entre 180 °C et 240 °C, comprenant une lentille (21), un porte-lentille (22) et une plaque de capteur d'image (23), **caractérisé en ce que :**
la lentille (21) est en mesure de supporter des températures supérieures à 180 °C ;
le porte-lentille (22) est engagé avec la lentille (21), le porte-lentille étant en mesure de supporter des températures supérieures à 180 °C ; et
la plaque de capteur d'image (23) est fixée directement sur le fond du porte-lentille (22).

2. Module de caméra selon la revendication 1, dans lequel la lentille (21) est formée dans un matériau choisi dans un groupe constitué de verre hautement résistant à la chaleur et de céramique.

3. Module de caméra selon la revendication 1, dans lequel le porte-lentille (22) est formé dans un matériau choisi dans un groupe constitué de polymère à cristaux liquides et de Nylon.

4. Module de caméra selon la revendication 1, dans lequel le module de caméra (2) est en mesure d'être assemblé sur une plaque principale (3) d'un système par une technologie de montage en surface (SMT).

5. Module de caméra selon la revendication 4, dans lequel le système est choisi dans un groupe constitué d'un système de téléphone portable, d'un système d'ordinateur portable, d'un système de caméra numérique et d'un système vidéo numérique.

6. Procédé de fabrication de modules de caméra (2) adapté pour un traitement à l'aide d'une technologie de montage en surface (SMT) avec un équipement de brasage ayant une température entre 180 °C et 240 °C, comprenant les étapes consistant à :
mettre en oeuvre une lentille (21), celle-ci étant en mesure de supporter des températures supérieures à 180 °C ;
engager la lentille (21) avec un porte-lentille (22) ;
fixer une plaque de capteur d'image (23) directement sur un fond du porte-lentille (22) ; et
combiner la lentille (21), le porte-lentille (22) et la plaque de capteur d'image (23) pour former un dispositif de montage en surface (2), ce dernier étant en mesure de supporter des températures supérieures à 180 °C.

7. Procédé selon la revendication 6, comprenant en outre une étape de focalisation de la lentille (21) avant de former le dispositif de montage en surface (2).

8. Procédé selon la revendication 6, dans lequel le dispositif de montage en surface (2) comprend une étape de montage des billes de brasage sur le dispositif de montage en surface (2) ou une étape d'application de brasure sur une surface du dispositif de montage en surface (2).

9. Procédé selon la revendication 6, dans lequel l'étape de formation du dispositif de montage en surface (2) comprend en outre une étape d'assemblage du dispositif de montage en surface (2) sur une plaque principale (3) d'un système.
